# EUROPEAN PATENT APPLICATION

(11) **EP 4 615 163 A1**
(43) Date of publication of application: **10.09.2025**
(21) Application number: 23884954.1
(22) Date of filing: 31.10.2023
(51) Int. Cl.: H05B 47/155, H05B 47/165

(54) **INTELLIGENT CONTROL METHOD, INTELLIGENT CONTROL SYSTEM AND INTELLIGENT LIGHTING SYSTEM**

(30) Priority: 03.11.2022 CN 202211371038
(71) Applicant: Suzhou Opple Lighting Co., Ltd., Suzhou, Jiangsu 215211 (CN); Opple Lighting Co., Ltd., Shanghai 201201 (CN)
(72) Inventor: FENG, Yunlong, Shanghai 200120 (CN); XU, Xingxing, Shanghai 200120 (CN)
(74) Representative: Winter, Brandl - Partnerschaft mbB
(86) International application number: PCT/CN2023/128757
(87) International publication number: WO 2024/094025

(57) **Abstract**

Provided are an intelligent control method, an intelligent control system and an intelligent lighting system. The intelligent control method comprises: when a controlled device receives a control instruction for switching a first scene to a second scene, the controlled device responds to the control instruction and queries a spatial feature value of the controlled device; and the controlled device sends a control message comprising the control instruction and the spatial feature value to other controlled devices, and the other controlled devices execute the instruction when the same feature value exists, so that the controlled device is linked to the other controlled devices to achieve overall control.

## Description

The present application claims the priority of the Chinese Patent Application No. 202211371038.0 filed on November 3, 2022, with the title of "INTELLIGENT CONTROL METHOD, INTELLIGENT CONTROL SYSTEM AND INTELLIGENT LIGHTING SYSTEM", and the entire contents of the present application are incorporated by reference in the present application.

### TECHNICAL FIELD

The present application relates to a technical field of device linkage control, more particularly to an intelligent control method, an intelligent control system and an intelligent lighting system.

### BACKGROUND

With the development and growth of the Internet of Things industry, intelligent control systems have increasingly penetrated various industries. However, with the popularization and expansion of applications, some problems have inevitably exposed. Take some applications of intelligent lighting as an example, when a user uses lighting device, a specific device is often needed to adjust global lighting effects. However, after the user adjusts a certain device, the global lighting atmosphere is often found to be insufficiently coordinated, and therefore the user needs to find another global adjustment device to perform global adjustment. These problems in terms of detailed experience also bring considerable resistance to the intelligent popularization of lighting.

### TECHNICAL PROBLEM

For the overall control of devices of the same type in a certain space, online control methods such as APP and front-end user interface are generally used to achieve collective control. However, these control methods need to be carried out through cloud or advance configuration, which is not sufficiently convenient for an end user, as they fail to provide a more convenient configuration method.

### TECHNICAL SOLUTIONS

Embodiments of the present application provide an intelligent control method, an intelligent control system and an intelligent lighting system, to solve the problem of inconvenience in overall control of devices of the same type within a certain space.

In a first aspect, embodiments of the present application provide an intelligent control method, which is applied to an intelligent control system in which multiple controlled devices capable of communicating with each other are installed in the same space or different spaces, and the method including:
upon a controlled device receiving a control instruction that a user needs to switch a current first scene to a second scene, the controlled device responding to operation of the control instruction and querying its own spatial feature value according to the control instruction, and the spatial feature value including a first spatial feature value with spatial control permission;
the controlled device sending a control message including the control instruction and the first spatial feature value to other controlled devices, and the other controlled devices executing the control instruction upon respective spatial feature values of the other devices being equal to the first spatial feature value, so that the controlled device links with the other controlled devices to achieve overall control.

In some embodiments, before the controlled device receiving the control instruction that the user needs to switch the current first scene to the second scene, the method further includes:
the system sending a configuration instruction to each controlled device entering the intelligent control system to configure a corresponding spatial encoding as its spatial feature value;
the system configuring a corresponding spatial control permission for each controlled device according to the spatial feature value;
the system dividing controlled devices with a same spatial number into a same network.

In some embodiments, querying its own spatial feature value according to the control instruction includes:
determining whether the spatial control permission corresponding to the control instruction is activated;
in response to the spatial control permission corresponding to the control instruction having been activated, forwarding the control message;
in response to the spatial control permission corresponding to the control instruction having not been activated, not forwarding the control message.

In some embodiments, the other controlled devices executing the control instruction upon the respective spatial feature values of the other devices being equal to the first spatial feature value includes:
in response to the other controlled devices being Bluetooth devices, converting the control message sent by the controlled device by a gateway of the other controlled devices;
in response to the other controlled devices being WIFI devices, the other controlled devices responding to the control message through a method of Local Area Network broadcasting.

In some embodiments, the other controlled devices executing the control instruction upon the respective spatial feature values of the other devices being equal to the first spatial feature value further includes:
the other controlled devices determining whether their respective spatial feature values match the first spatial feature value;
if matched, executing the control instruction;
if not matched, not executing the control instruction.

In a second aspect, embodiments of the present application also provide an intelligent control system, which includes a plurality of controlled devices capable of communicating with each other in a same space or in different spaces, upon a controlled device receiving a control instruction that a user needs to switch a current first scene to a second scene, the controlled device responding to operation of the control instruction and querying its own spatial feature value according to the control instruction, the spatial feature value including a first spatial feature value with spatial control permission, and sending a control message including the control instruction and the first spatial feature value to other controlled devices, and the other controlled devices executing the control instruction upon respective spatial feature values of the other devices being equal to the first spatial feature value, so that the controlled device links with the other controlled devices to achieve overall control.

In some embodiments, the system further includes:
the permission configuration module is configured to send a configuration instruction to each controlled device entering the intelligent control system to configure the corresponding space number as its space characteristic value, and configure the corresponding space for each controlled device according to the space characteristic value. Control permissions, and dividing controlled devices with the same space number into the same network.

In some embodiments, the system further includes:
a first determination module being configured to:
determine whether the spatial control permission corresponding to the control instruction is activated;
in response to the spatial control permission corresponding to the control instruction having been activated, forward the control message;
in response to the spatial control permission corresponding to the control instruction having not been activated, not forward the control message.

In some embodiments, each controlled device includes:
a second determination module being configured to:
determine whether its own spatial feature value matches the first spatial feature value;
if matched, execute the control instruction;
if not matched, not execute the control instruction.

In a third aspect, embodiments of the present application also provide an intelligent lighting system configured to perform steps of the intelligent control method as described in any one of the first aspects.

### BENEFICIAL EFFECT

The intelligent control method, the intelligent control system and the intelligent lighting system provided by the embodiments of the present application, by configuring a controlled device with a first spatial feature value having spatial control permission, when the user needs to adjust the controlled device, by sending a control instruction to the controlled device, and the controlled device sends a control message including the control instruction and the first spatial feature value to the other controlled devices, so that the controlled device can control another controlled device in a linkage to perform corresponding adjustment operations, thereby greatly reducing the frequency of the user's secondary adjustment of the intelligent device, which is more convenient for the end user.

### BRIEF DESCRIPTION OF DRAWINGS

In order to more clearly illustrate embodiments of the present application in the prior art, the drawings required to be used in the embodiments of the present application will be briefly introduced below. It is evidently that the drawings in the following description are only some embodiments recorded in the embodiments of the present application, and for those skilled in the art, other drawings can also be obtained in accordance with these accompanying drawings without any creative efforts.
Fig. 1 is a flow schematic diagram of an intelligent control method provided by an embodiment of the present application;
Fig. 2 is a flow schematic diagram of the intelligent control method provided by an embodiment of the present application;
Fig. 3 is a schematic diagram of scene switching provided by an embodiment of the present application;
Fig. 4 is a structural schematic diagram of an intelligent control device provided by an embodiment of the present application;
Fig. 5 is a structural schematic diagram of an intelligent lighting system provided by an embodiment of the present application.

### DETAILED DESCRIPTION

In order to make objects, technical solutions and advantages of the application more apparent, the technical solutions of the embodiments of the present application will be described in a clearly and fully understandable way in connection with the embodiments of the present application and corresponding drawings. Apparently, the described embodiments are just a part but not all of the embodiments of the present application. Based on the described embodiments in the present application, those ordinary skilled in the art can obtain all other embodiment(s), without any inventive work, which should be within the scope of protection of the present application.

The terms "first", "second", etc. in the description and claims of this application and the above-mentioned drawings are used to distinguish similar objects and are not necessarily used to describe a specific order or sequence. It should be understood that the data so used are interchangeable under appropriate circumstances such that the embodiments described herein may be implemented in sequences other than those illustrated or described herein.

During the actual use of intelligent lamps, in response to a large number of lighting devices in a certain space (such as a certain room), the lighting effect is usually adjusted by a remote controller or a scene panel. However, in response to the user's desire to adjust the overall lighting effect, it is often difficult to achieve overall and consistent adjustment because of the form of control products. Even with products that can achieve overall adjustment (such as dimming button panel), a lot of configuration work needs to be done in advance, which is not convenient for the end user.

Devices such as desk lamps, floor lamps, chandeliers, downlights, light strips, etc. may be called devices of the same type, although it is possible to adjusted them to a certain scene individually by using the buttons on each device, it is not possible to control other devices in a linked manner through a certain device. For example, it is not possible to control brightness and color temperature of other floor lamps and chandeliers respectively in a linked manner by adjusting the brightness and the color temperature of a certain desk lamp. Therefore, it is not possible to achieve overall adjustment, and multiple adjustments are required.

Therefore, in order to solve the problem of inconvenience in overall control of the devices of the same type in a certain space, embodiments of the present application provide an intelligent control method, an intelligent control system and an intelligent lighting system. By configuring a controlled device with a first spatial feature value having spatial control permission, upon the user's need to adjust the controlled device, a control instruction is sent to the controlled device. The controlled device sends a control message including the control instruction and the first spatial feature value to other controlled devices, so that the controlled device can control the other controlled devices in a linked manner to perform corresponding adjustment operations. As a result, the frequency of the user's secondary adjustment of the intelligent device is greatly reduced, which is more convenient for the end user.

It should be noted that the technical solutions of the embodiments of the present application may be used in situations that require synchronous batch adjustment, such as residential and commercial, and so on. In residential situations, it is not limited to the fields such as intelligent lamps, intelligent curtains, intelligent fan lights and so on.

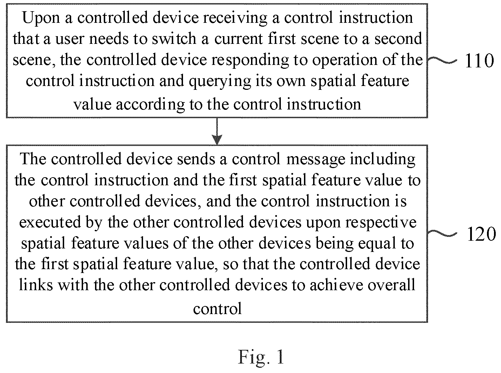

The intelligent control method, the intelligent control system and the intelligent lighting system of the present application are described below with reference to Figs. 1 to 5.

Please refer to Fig. 1, Fig. 1 is a flow schematic diagram of an intelligent control method provided by an embodiment of the present application. An intelligent control method, applied to an intelligent control system with in which a plurality of multiple controlled devices capable of communicating with each other are set in the same space or in different spaces, the method including:
Step 110, upon a controlled device receiving a control instruction that a user needs to switch a current first scene to a second scene, the controlled device responding to operation of the control instruction and querying its own spatial feature value according to the control instruction.

Among them, the spatial feature value includes a first spatial feature value with spatial control permission, and may also include a second spatial feature value without spatial control permission.

For example, the controlled device may be a device specified in advance by the system, or may be an arbitrarily selected device.

For example, the control instruction includes a scene control parameter, the scene control parameter is an adjustable parameter common to each device. For example, the adjustable parameter may be a certain basic parameter of a switch control, a brightness level, or a color temperature level. It is understandable that the control instruction may also be all control parameters of a specific scene, such as scene control parameters in cozy mode.

For example, for lamps, there are two types of scenes: one type is scenes preset by the system, for example, the scene numbers are FF01 to FF08 (each scene has a relatively fixed lighting effect). Another type is scenes created by users themselves. For example, the custom scene numbers are 0001 to FF00. The number of a custom scene is uncertain and will only be generated when the custom scene is created. The purpose of the custom scene is to consider that other lamps in the room are not necessarily in the preset scene, so other lamps in the room need to be converted into relatively clear parameters such as brightness, color temperature, etc., so that the surrounding lamps can achieve the same effect as the lamp that initiates the control.

For example, the spatial feature value indicates an encoding of the space where each device is located, and the spatial feature value may include a parent spatial feature value and a child spatial feature value. For example, the parent spatial feature value is Building 2, and its code is 2#, the child spatial feature value is a certain room corresponding to the building number, for example, it is room 301, and its code is 301, indicating room 301 in Building 2.

Step 120, the controlled device sends a control message including the control instruction and the first spatial feature value to the other controlled devices, and the control instruction is executed by the other controlled devices upon respective spatial feature values of the other devices being equal to the first spatial feature value, so that the controlled device links with the other controlled devices to achieve overall control.

For example, suppose that the controlled device has spatial control permission for all rooms in Building 2 through the system preset, the spatial feature value (i.e., the first spatial feature value) of the controlled device with spatial control permission is 2#, and the content of the control instruction may be "adjust the current brightness to 50%". Therefore, the controlled device sends a control message including "control instruction + first spatial feature value " to the other controlled devices.

Based on the characteristics of the intelligent communication protocol of the IoT device, the common adjustable attributes/parameters (such as brightness, color temperature, etc.) in each controlled device are distilled, and by adding one or more auxiliary spatial feature values (such as 2#, 2# 301, 2# 302, etc.), the devices in the current space may be classified into one or more virtual categories. In response to the need to adjust all controlled devices in a certain space, give any controlled device the corresponding permission, so that the effect of adjusting the other controlled devices can be achieved by adjusting the controlled device.

The intelligent control method described in this application is described below through specific embodiments.

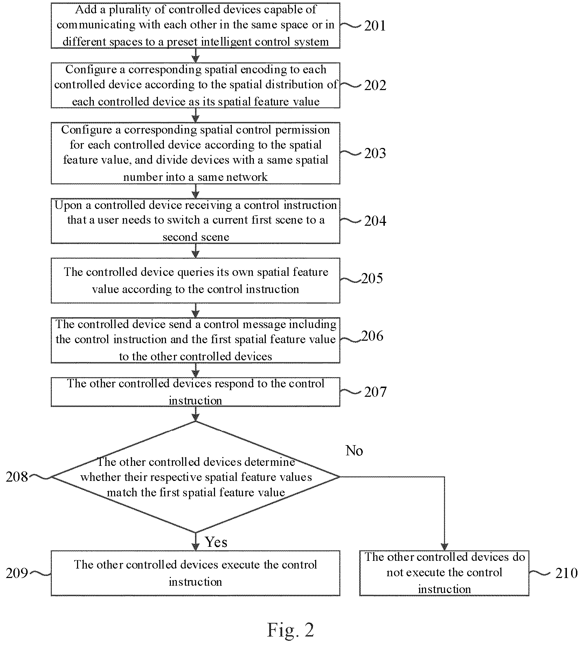

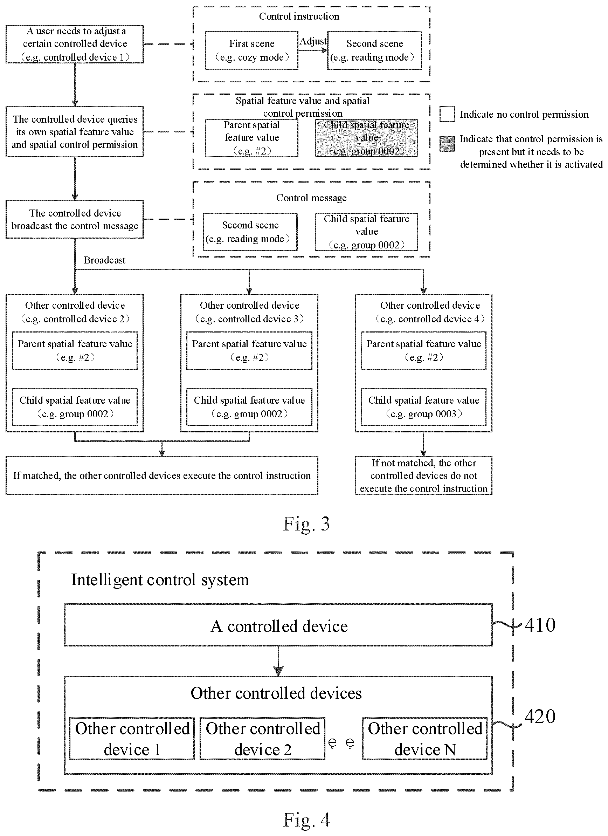

Please refer to Fig. 2 and Fig. 3. Fig. 2 is a flow schematic diagram of the intelligent control method provided by an embodiment of the present application, and Fig. 3 is a schematic diagram of scene switching provided by an embodiment of the present application. A method of intelligent control includes:
Step 201, adding a plurality of controlled devices capable of communicating with each other in the same space or in different spaces to a preset intelligent control system.
   For example, add controlled device 1 to controlled device 4 to the preset intelligent control system.
Step 202, sending a configuration instruction to each controlled device according to the spatial distribution of each controlled device, so as to configure a corresponding spatial encoding as its spatial feature value of each controlled device.

For example, the format of the configuration instruction may be defined as follows:

| | Destination Address U32 | Msg Type (U32) | Key ID (U8) | Parameter1 (U16) | Parameter2 (U8) |
|---|---|---|---|---|---|
| Example | XX XX XX XX | 00 00 XX 03 | F2 | Group ID | 01 |
| Note: Msg Type indicates configuration instruction, Key ID indicates spatial control permission, Parameter1 indicates spatial feature value corresponding to permission, Parameter2 indicates whether permission is activated (e.g. 01 indicates activation, 00 indicates disable). | | | | | |

For example, controlled device 1 to controlled device 4 belong to Building 2 (2#), and the room numbers assigned to controlled device 1, controlled device 2, and controlled device 3 are group 0002, and the room number assigned to controlled device 4 is group 0003.

Step 203, configuring a corresponding spatial control permission for each controlled device according to the spatial feature value, and dividing devices with a same spatial number into a same network.

For example, it may be set in advance that controlled device 1, controlled device 2, and controlled device 3 have spatial control permissions for room group 0002, controlled device 4 has a spatial control permission for room group 0003, and that controlled device 1 to controlled device 4 have no spatial control permission for the entire building (for example, #2). Controlled device 1, controlled device 2 and controlled device 3 are in the same network, and controlled device 4 is in another network.

Step 204, upon a controlled device receiving a control instruction that a user needs to switch a current first scene to a second scene.

For example, the format of the control instruction may be defined as follows:

| | Destination Address U32 | Msg Type (U32) | Msg content | | |
|---|---|---|---|---|---|
| Example | XX XX XX XX | 00 00 XX 03 | FF | | |
| Note: Msg Type indicates a control instruction, for example, it can indicate a control instruction for adjusting brightness (or color temperature, etc.), and Msg content indicates the value of brightness (or color temperature, etc.). | | | | | |

Taking controlled device 1 as an example, that is, controlled device 1 is used as a certain controlled device. Suppose that controlled device 1 is a lamp device and has the permission to link to control the other controlled devices in a certain room, it has 6 buttons: switch mode (including lighting on action and lighting off action)/scene 1/scene 2/scene 3/scene 4/custom scene.

For example, the preset linkage rules are as follows:
1) Lighting on action -> other lamps in the room -> adjust brightness to a first preset value (e.g. 50%);
2) Lighting off action -> other lamps in the room -> adjust brightness to a second preset value (e.g. 80%);
3) Scene 1 (e.g. it is cozy mode)-> other lamps in room -> switch scene to preset cozy mode.
4) Scene 2 (e.g. it is reading mode)-> other lamps in room -> switch scene to preset reading mode.
5) Scene 3 (e.g. it is viewing mode)-> other lamps in room -> switch scene to preset viewing mode.
6) Scene 4 (e.g. it is rest mode)-> other lamps in room -> switch scene to preset rest mode.
7) Custom scenes.

Suppose that the user needs to switch the controlled device 1 from the cozy mode of scene 1 to the reading mode of scene 2, for example, the user can switch to the mode of scene 2 by pressing the button of scene 2, then the control instruction sent out by the controlled device 1 includes the control parameters of scene 2.

Step 205, the controlled device queries its own spatial feature value according to the control instruction.

For example, the controlled device queries its own spatial feature value also includes determining whether the spatial control permission corresponding to the control instruction is activated. In response to the spatial control permission corresponding to the control instruction having been activated, forward the control message including the control instruction and the first spatial feature value. In response to the spatial control permission corresponding to the control instruction having not been activated, not forward the control message.

Among them, the spatial feature value includes the parent spatial feature value and the child spatial feature value. For example, the parent spatial feature value of the controlled device 1 is #2, and the child spatial feature value is group 0002. Suppose that the controlled device 1 has spatial control permission for the child spatial feature value group 0002, and has no spatial control permission for the parent spatial feature value #2, that is to say, the controlled device 1 cannot control the lamps in the entire building of Building 2, but may only control the lamps in room group 0002. Therefore, the first spatial feature value here is group 0002, the second spatial feature value is #2.

Moreover, activate the spatial control permission for the first spatial feature value. It may be preset that after entering the system or local networking, the spatial control permission of the controlled device is disabled by default. Therefore, the spatial control permission of the controlled device 1 needs to be activated only when the controlled device 1 acts as a control device to initiate adjustment. The method of activation includes any one of the following:
the first one, default activation;
the second one, configuring the device with a button to turn on the switch for activation;
the third one, activation is achieved through network control.

For example, for the third activation method, it may be determined whether it is activated by setting a flag bit. Each time a control instruction is received, it is necessary to query whether the flag bit is set. In response to the flag bit being set, it indicates that the permission is activated. While the controlled device makes its own response, it also forwards the control message including the control instruction and the first spatial feature value with the spatial control permission. In response to the flag bit not being set, it indicates that the permission is not activated, and the controlled device only makes its own response and does not forward the control message.

It should be noted that whether the controlled device needs to turn on the activation permission may be preset by the user themselves, and the turn-on permission may be the spatial control permission of a certain space or the spatial control permission of multiple spaces., the embodiments of the present application do not limit this.

For example, it may be activated by turning on the linkage switch button configured on the controlled device 1.

Step 206, the controlled device sending a control message including the control instruction and the first spatial feature value to the other controlled devices.

For example, the format of the sent control message including the control instruction and the first spatial feature value may be defined as follows:

| | Group control message word (4 bytes) | Group ID (4 bytes) | Len (2 bytes) | Msg Type (4 bytes) | Msg Content |
|---|---|---|---|---|---|
| Example | 0000D603 | FFFF0002 | 0006 | 030d0000 | FF04 |

Among them, the group control message word indicates the control instruction to be sent by the controlled device for the control of the other controlled devices in a certain area, such as sending the control for a certain room/a certain building. The Group ID indicates the first spatial feature value of the building/floor/room. The len indicates the length of the control instruction. The msg type indicates the scene type that the control instruction intends to switch, such as brightness control or color temperature control, or simply switching the lights. For different control types, the type here may be different. The msg content indicates the control parameter in the control instruction. For example, the control instruction for turning on the light is 031101, the msg type is 0311, and the msg content is 01. The control instruction for turning off the light is 031100, the msg type is 0311, and the msg content is 00.

For example, the controlled device may send the control instruction and the first spatial feature value to the other controlled devices through a method of broadcasting.

It should be noted that the above-mentioned configuration instruction, the control instruction and the control message have different formats and the meanings are also different. The configuration instruction is an instruction for configuring spatial control permission for each controlled device. The control instruction is used to control a certain controlled device to switch to a certain scene, and realize linkage control of the scene for the other controlled devices through the controlled device.

For example, if a certain controlled device receives a configuration instruction to set a spatial control permission, then the object of the configuration instruction is the controlled device, and only the spatial control permission of the controlled device needs to be set.

For another example, if a controlled device receives a control instruction to switch the first scene to the second scene, then the objects of the control instruction are the controlled device and the other controlled devices, that is, the controlled device needs to broadcast a control message including the control instruction and the first spatial feature value corresponding to the control instruction to control the other controlled devices in linkage.

Step 207, the other controlled devices responding to the control instruction.

Specifically, whether the other controlled devices respond to the control instruction only needs to determine whether their own spatial feature value is the same as the first spatial feature value. If they are the same, it indicates that they are in the same space. It should be noted that, at this time, the other controlled devices do not need to determine whether they have the activation spatial control permission, but only determine whether their own space value is the same as the first space characteristic value, and upon determining that the values are the same, respond to the control instruction.

For example, in response to the other controlled devices being Bluetooth devices, converting the control instruction sent by the controlled device by a gateway of the other controlled devices and then responding to. For example, controlled device 2, controlled device 3, and controlled device 4 are all Bluetooth devices, then the control message sent by controlled device 1 is converted and processed by the gateway of controlled device 2, controlled device 3, and controlled device 4.

For example, in response to the other controlled devices being WIFI devices, the other controlled devices responding to the control message through a method of Local Area Network broadcasting. For example, controlled device 2 and controlled device 3 are devices belonging to Bluetooth gateway A, and controlled device 4 is a WIFI device. Then the control message sent by controlled device 1 is converted and processed by the gateway A of controlled device 2 and controlled device 3. The controlled device 4 responds to the control message through the method of Local Area Network broadcasting.

Step 208, the other controlled devices determining whether their respective spatial feature values match the first spatial feature value.

Step 209, if matched, the other controlled devices execute the control instruction.

Step 210, if not matched, the other controlled devices do not execute the control instruction.

For example, in response to the spatial feature values of the controlled device 2 and the controlled device 3 both being group 0002 and matching the controlled device 1, the controlled device 2 and the controlled device 3 execute the control instruction, that is, perform the operation of switching to the second scene. In response to the spatial feature value group 0003 of the controlled device 4 not matching the controlled device 1, the control instruction will not be executed.

In summary, the embodiments of the present application, by regulating a certain controlled device, the effect of regulating the other controlled devices in the current area can be achieved, that is, the control of a certain individual controlled device can be linked to the batch control of the other controlled devices in the area. Moreover, in the embodiment of the present application, by reusing the control buttons of a certain controlled device, the other controlled devices in the current space can be regulated simultaneously. Furthermore, by configuring spatial control permission for the controlled device in advance, the number of devices with the permission to control the other controlled devices can be freely adjusted to avoid abuse and misuse of batch control. Therefore, due to the addition of targeted configuration function, it is possible to avoid the ineffective and chaotic control caused by misoperations.

The intelligent control device provided by the embodiment of the present application is described below. The intelligent control device described below and the method of the intelligent control device described above can be corresponding to and referenced against each other.

Please refer to Fig. 4, Fig. 4 is a structural schematic diagram of an intelligent control device provided by an embodiment of the present application. An intelligent control system includes N controlled devices, where N is a natural number greater than 0. The controlled device with spatial control permission may be preset by the system, or may be any one of many controlled devices.

For example, upon a controlled device receiving a control instruction that a user needs to switch a current first scene to a second scene, the controlled device 410 is configured to:
respond to operation of the control instruction and query its own spatial feature value according to the control instruction, the spatial feature value includes a first spatial feature value with spatial control permission, and send a control message including the control instruction and the first spatial feature value to the other controlled devices.

For example, the other controlled devices 420 are configured to:
execute the control instruction upon respective spatial feature values of the other devices being equal to the first spatial feature value, so that the controlled device links with the other controlled devices to achieve overall control.

For example, the system further includes a permission configuration module being configured to:
send a configuration instruction to each controlled device entering the intelligent control system to configure a corresponding spatial encoding as its spatial feature value, configure a corresponding spatial control permission for each controlled device according to the spatial feature value and divide controlled devices with a same spatial number into a same network.

For example, the system further includes a first determination module, the first determination module configured to:
a first determination module being configured to:
determine whether the spatial control permission corresponding to the control instruction is activated;
in response to the spatial control permission corresponding to the control instruction having been activated, forward the control message;
in response to the spatial control permission corresponding to the control instruction having not been activated, not forward the control message.

For example, the other controlled devices 420 respond to the control message in the following methods:
in response to the other controlled devices being Bluetooth devices, converting the control message sent by the controlled device by a gateway of the other controlled devices;
in response to the other controlled devices being WIFI devices, the other controlled devices responding to the control message through a method of Local Area Network broadcasting.

For example, the other controlled devices 420 all include a second determination module being configured to:
determine whether its own spatial feature value matches the first spatial feature value;
if matched, execute the control instruction;
if not matched, not execute the control instruction.

It should be noted here that the above-mentioned intelligent control system provided by the embodiments of the present application can implement all the method steps implemented by the above-mentioned method embodiments and can achieve the same technical effects. The same parts and beneficial effects of this embodiment as those of the method embodiments will not be described in detail here.

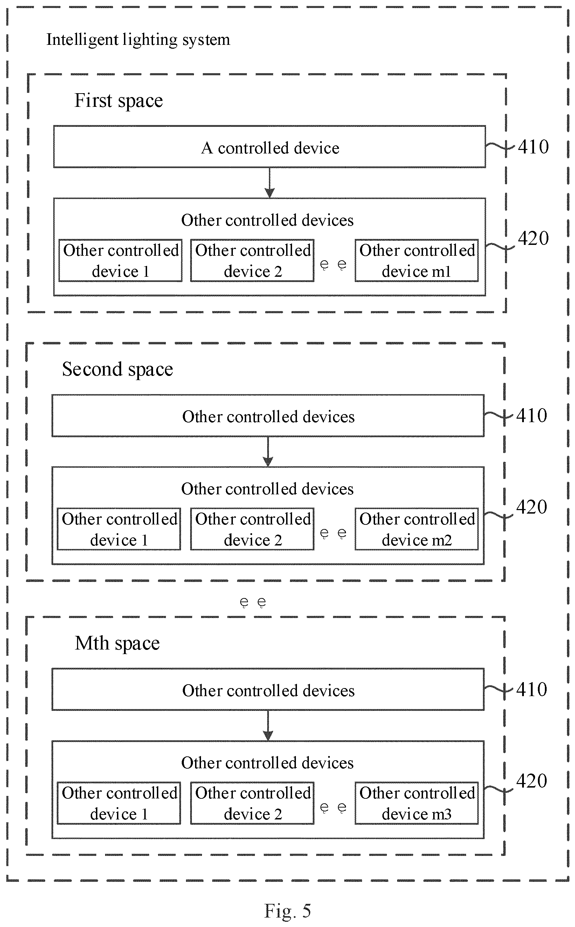

Fig. 5 illustrates a structural schematic diagram of an intelligent lighting system. As shown in Fig. 5, the intelligent lighting system is used to execute the steps of the intelligent lighting system. The intelligent lighting system may include controlled devices of M spaces. For example, the first space includes m1 controlled devices, the second space includes m2 controlled devices, and the Mth space includes m3 controlled devices. Among them, M, m1, m2, and m3 are all natural numbers greater than 0.

It can be understood that the first space may refer to the parent space, for example, the name of a certain building number. The second space may be a child space, for example, the name of a certain floor. The third space may be a child space, for example, the name of a certain room. The controlled devices in each space may be devices in different rooms in the same parent space, or devices on different floors. Specifically, it may be set according to the actual situation, and it is not limited by the embodiment of the application. The execution steps of the controlled device and the other controlled devices in this embodiment are as described above and will not be repeated here.

It should be noted that the controlled device and the other controlled devices described in the embodiment of this application are relative. In response to the user's need to adjust the controlled device A, the controlled device A serves as the control device, upon the controlled device A controlling other devices, the other controlled devices act as the controlled devices. In response to the user's need to adjust the controlled device B, the controlled device B serves as the control device, upon the controlled device B controlling other devices, the other controlled devices (including device A) are called controlled devices.

The above embodiments are only used to illustrate the technical scheme of the embodiments of the application, but not to limit it. Although the application has been described in detail with reference to the preferred embodiments, it should be understood by those skilled in the art that: it is still possible to modify the technical solutions recorded in the foregoing embodiments, or make equivalent substitutions for some of the technical features; and these modifications or substitutions do not cause the essence of the corresponding technical solutions to depart from the scope of the technical solutions of the embodiments of the present application.

## Claims

1. An intelligent control method, applied to an intelligent control system in which a plurality of controlled devices capable of communicating with each other are set in a same space or in different spaces, the method comprising:
upon a controlled device receiving a control instruction that a user needs to switch a current first scene to a second scene, the controlled device responding to operation of the control instruction and querying its own spatial feature value according to the control instruction, and the spatial feature value comprising a first spatial feature value with spatial control permission;
the controlled device sending a control message comprising the control instruction and the first spatial feature value to other controlled devices, and the other controlled devices executing the control instruction upon respective spatial feature values of the other devices being equal to the first spatial feature value, so that the controlled device links with the other controlled devices to achieve overall control.

2. The intelligent control method according to claim 1, wherein, before the controlled device receiving the control instruction that the user needs to switch the current first scene to the second scene, the method further comprises:
the system sending a configuration instruction to each controlled device entering the intelligent control system to configure a corresponding spatial encoding as its spatial feature value;
the system configuring a corresponding spatial control permission for each controlled device according to the spatial feature value;
the system dividing controlled devices with a same spatial number into a same network.

3. The intelligent control method according to claim 1 or 2, wherein querying its own spatial feature value according to the control instruction comprises:
determining whether the spatial control permission corresponding to the control instruction is activated;
in response to the spatial control permission corresponding to the control instruction having been activated, forwarding the control message;
in response to the spatial control permission corresponding to the control instruction having not been activated, not forwarding the control message.

4. The intelligent control method according to claim 1, wherein the other controlled devices executing the control instruction upon the respective spatial feature values of the other devices being equal to the first spatial feature value comprises:
in response to the other controlled devices being Bluetooth devices, converting the control message sent by the controlled device by a gateway of the other controlled devices.

5. The intelligent control method according to claim 1, wherein, in response to the other controlled devices being WIFI devices, the other controlled devices responding to the control message through a method of Local Area Network broadcasting.

6. The intelligent control method according to claim 1, wherein the other controlled devices executing the control instruction upon the respective spatial feature values of the other devices being equal to the first spatial feature value comprises:
the other controlled devices determining whether their respective spatial feature values match the first spatial feature value;
if matched, executing the control instruction;
if not matched, not executing the control instruction.

7. An intelligent control system, wherein the system comprises: a plurality of controlled devices capable of communicating with each other in a same space or in different spaces, upon a controlled device receiving a control instruction that a user needs to switch a current first scene to a second scene, the controlled device responding to operation of the control instruction and querying its own spatial feature value according to the control instruction, the spatial feature value comprising a first spatial feature value with spatial control permission, and sending a control message comprising the control instruction and the first spatial feature value to other controlled devices, and the other controlled devices executing the control instruction upon respective spatial feature values of the other devices being equal to the first spatial feature value, so that the controlled device links with the other controlled devices to achieve overall control.

8. The intelligent control system according to claim 7, wherein the system further comprises:
a permission configuration module, configured to send a configuration instruction to each controlled device entering the intelligent control system to configure a corresponding spatial encoding as its spatial feature value, configure a corresponding spatial control permission for each controlled device according to the spatial feature value and divide controlled devices with a same spatial number into a same network.

9. The intelligent control system according to claim 7 or 8, wherein the system further comprises:
a first determination module being configured to:
determine whether the spatial control permission corresponding to the control instruction is activated;
in response to the spatial control permission corresponding to the control instruction having been activated, forward the control message;
in response to the spatial control permission corresponding to the control instruction having not been activated, not forward the control message.

10. The intelligent control system according to claim 7, wherein the other controlled devices are Bluetooth devices, the control message sent by the controlled device is converted by a gateway of the other controlled devices.

11. The intelligent control system according to claim 7, wherein the other controlled devices are WIFI devices, the other controlled devices respond to the control message through a method of Local Area Network broadcasting.

12. The intelligent control system according to claim 7, wherein each controlled device comprises:
a second determination module being configured to:
determine whether its own spatial feature value matches the first spatial feature value;
if matched, execute the control instruction;
if not matched, not execute the control instruction.

13. An intelligent lighting system, wherein the intelligent lighting system is configured to perform steps of the intelligent control method according to any one of claims 1 to 6.
